# EUROPEAN PATENT APPLICATION

(11) **EP 2 620 619 A2**
(43) Date of publication of application: **31.07.2013**
(21) Application number: 13152585.9
(22) Date of filing: 24.01.2013
(51) Int. Cl.: F02C 7/18

(54) **Method of using external fluid for cooling high temperature components of a gas turbine for a process power plant**

(30) Priority: 24.01.2012 US 201213356677
(71) Applicant: General Electric Company, Schenectady, New York 12345 (US)
(72) Inventor: Mundra, Kamlesh, Schenectady, NY New York 12345 (US); Anand, Ashok Kumar, Schenectady, NY New York 12309 (US); Muthaiah, Veerappan, Schenectady, NY New York 12309 (US)
(74) Representative: Cleary, Fidelma

(57) **Abstract**

An external fluid (27) in a closed loop is used to cool hot gas path components of gas turbine (16). After cooling the turbine components, the heated external fluid (27) is dumped either in the compressor discharge casing (28) or in the one of the turbine's stages (16A-C). Where the external fluid (27) is nitrogen to be dumped in the turbine compressor's discharge casing (28), the nitrogen is compressed using diluent nitrogen compressors (17). Alternatively, where the external fluid (27) is nitrogen to be dumped in one of the stages (16A-C) of the turbine (16), the nitrogen is not compressed at all. The turbine blade heat exchangers (22) in the turbine stages (16A-C) through which the nitrogen passes can be connected in parallel or in series for cooling the hot gas path components in the turbine stages (16A-C). The nitrogen can optionally be mixed with air or steam or not mixed at all.

## Description

The present invention relates to turbines, and more particularly, to an arrangement using a fluid external to a gas turbine for a process power plant to cool high temperature components of the gas turbine.

### BACKGROUND OF THE INVENTION

Open loop air cooling of stationary and rotating components of a gas turbine of an integrated gasification combined cycle (IGCC) Power Plant using air extracted from the compressor reduces the efficiency of the turbine's Brayton cycle, *i.e.,* the thermodynamic cycle describing the operation of the gas turbine. The reduction in efficiency occurs because of (a) a reduction in firing temperature due to non-chargeable flow diluting the combustor exit temperature, (b) a reduction in work because of the bypassing of compressed air at upstream stages of the turbine, and (c) a reduction in work potential (availability loss) because of the dilution effects of the coolant stream mixing in the main gas path and the associated loss of aerodynamic efficiency.

### BRIEF DESCRIPTION OF THE INVENTION

In first aspect of the invention, an arrangement for cooling components of a gas turbine located in a high temperature path, the turbine being part of a system comprising the turbine, a combustor providing hot gas to the turbine, and a compressor providing compressed air to the combustor through a compressor discharge casing, is comprised of a source of nitrogen gas, at least one heat exchanger positioned within the turbine, a closed loop through which the nitrogen gas is transferred from the source of nitrogen gas to the heat exchanger in the turbine and then transferred from the heat exchanger and dumped in the compressor discharge casing or before nozzles in a path along which the gas from the combustor travels through the turbine, the nitrogen gas transferred from the heat exchanger removing heat from the turbine components in the high temperature path.

In another aspect of the invention, an arrangement for cooling components of a gas turbine located in a high temperature path, the turbine being a multi-stage turbine that is part of a system comprising the turbine, a combustor providing hot gas to the turbine, and a compressor providing compressed air to the combustor through a compressor discharge casing, comprises a source of nitrogen gas, at least one heat exchanger positioned within each stage of the turbine, and a closed path through which the nitrogen gas is transferred from the source of nitrogen gas to the heat exchangers in the turbine and transferred from the heat exchangers and dumped in the compressor discharge casing, the nitrogen gas transferred from the heat exchangers removing heat from the turbine components in the high temperature path.

In further aspect of the invention, an arrangement for cooling components of a gas turbine located in a high temperature path, the turbine being a multi-stage turbine that is part of a system comprising the turbine, a combustor providing hot gas to the turbine, and a compressor providing compressed air to the combustor through a compressor discharge casing, is comprised of a source of nitrogen gas, at least one heat exchanger positioned within each stage of the turbine, the heat exchangers positioned within the turbine stages being connected in parallel, and a closed path through which the nitrogen gas is transferred from the source of nitrogen gas to the heat exchangers in the turbine and transferred from the heat exchangers and dumped before nozzles in the last stage of turbine, the nitrogen gas transferred from the heat exchangers in the turbine removing heat from the turbine components in the high temperature path.

The present invention uses a system design solution to address the foregoing problems, thereby increasing the IGCC system net output and efficiency. The use of coolants, such as steam in a closed loop cooling arrangement, or nitrogen gas (N2) in an open loop cooling arrangement, for gas turbine (GT) hot gas path cooling is currently known.

In contrast, the present invention uses an external fluid, such as nitrogen gas, carbon dioxide, steam or air, in a closed loop cooling arrangement to provide cooling of stationary and/or rotating hot gas path components of a gas turbine. Where the fluid is nitrogen, the nitrogen can be obtained as a byproduct of an air separation process in which oxygen is obtained for a coal gasification process. Generally, nitrogen is currently used as a diluent in gas turbines after it has been compressed using diluent nitrogen compressors. The extent to which the hot gas path components can be cooled using an external fluid is limited by the availability of the fluid in sufficient quantities. The heated fluid can then be dumped, along with compressed air from the compressor, at the compressor discharge, or in one of the turbine stages, depending on the pressure of the heated fluid.

The present invention preferably uses an external fluid that is nitrogen from an external source, such as an air separation unit (ASU), in a closed loop to cool the hot gas path components, such as blades, of a gas turbine. After cooling the turbine components the heat removed through the nitrogen flow is dumped as part of the heated nitrogen fluid either in the compressor discharge casing or before the nozzles of one of the turbine's stages. Preferably, the heated nitrogen fluid is dumped before the turbine's last stage nozzles. This forms a regenerative way of heat recovery that is lost in turbine cooling. Where the external fluid stream is dumped in the compressor discharge casing, the temperature of the compressor discharge air will rise because of the addition of the heated fluid stream.

In the cooling arrangement of the present invention, the external fluid is compressed, as high as is necessary, using appropriate compressors, if the fluid is dumped in the compressor discharge casing. Where the external fluid is nitrogen, it is compressed using diluent nitrogen compressors. Alternatively, the external fluid is not compressed at all, if the fluid is transferred to the last stage nozzles of the turbine. The compressed or uncompressed external fluid is then introduced into the turbine stages for cooling the turbine components using either a parallel and/or a series arrangement. Where the external fluid is nitrogen, it could also be mixed with air or H2O vapor (steam), or not mixed at all.

It has been found that if a nitrogen fluid cooling arrangement is used to cool at least the first stage of gas turbine nozzles (S1N), and then if the nitrogen is dumped in the compressor discharge casing, the nitrogen cooling arrangement provides a 5% increase in IGCC net output and a 0.48 absolute pts improvement in IGCC net efficiency over the baseline scenario that is practiced in the current state of the art. This is achieved because combustor firing temperature is increased and closed loop heat is integrated in the gas turbine cycle.

### BRIEF DESCRIPTION OF THE DRAWINGS

Embodiments of the present invention will now be described, by way of example only, with reference to the accompanying drawings in which:
FIG. 1 is a simplified schematic diagram depicting the use of a fluid external to a gas turbine in a closed loop cooling arrangement to provide cooling of the stationary and/or rotating hot gas path components of the gas turbine.
FIG. 2 shows an embodiment in which turbine cooling is achieved using a parallel cooling arrangement, and in which the nitrogen used for the cooling is dumped in the compressor discharge casing.
FIG. 3 shows another embodiment in which turbine cooling is achieved using a parallel cooling arrangement, and in which the nitrogen used for the cooling is passed to the last turbine stage.
FIG. 4 shows a further embodiment in which turbine cooling is achieved using a series cooling arrangement, and in which the nitrogen used for the cooling is then dumped in the compressor discharge casing.

### DETAILED DESCRIPTION OF THE INVENTION

The present invention uses a fluid external to a gas turbine in a closed loop cooling arrangement to provide cooling of stationary and/or rotating hot gas path components of the gas turbine. The external fluid can be nitrogen gas, carbon dioxide, steam or air. Preferably, the external fluid is nitrogen which is obtained from an air separation unit (ASU) column, and then introduced into the closed loop to cool the hot gas path components of a gas turbine.

After cooling the turbine components, the heat removed using the external fluid flow is either dumped in the Compressor Discharge Casing (CDC) or dumped in the one of the stages of a multi-stage turbine. Preferably, the heated external fluid is dumped in the combustor/CDC, where the heat can be used at the best point of the turbine Brayton cycle. Alternatively, the heated external fluid can be dumped in an appropriate downstream turbine stage when the pressure of the heated fluid is not enough for the fluid to make it to the combustor or CDC sections. The stage of the turbine in which the heated fluid is dumped is determined by the pressure of the cooling fluid to be dumped. This cooling arrangement provides a regenerative way of achieving heat removal from the turbine components to thereby cool them.

The closed circuit cooling method helps to maintain turbine blade metal temperatures. The external cooling fluid flows through a drilled path in the turbine blades, and then comes out of the blades, thereby cooling them. While cooling, the external fluid gets hotter, which is similar to a heat exchange happening within the blades.

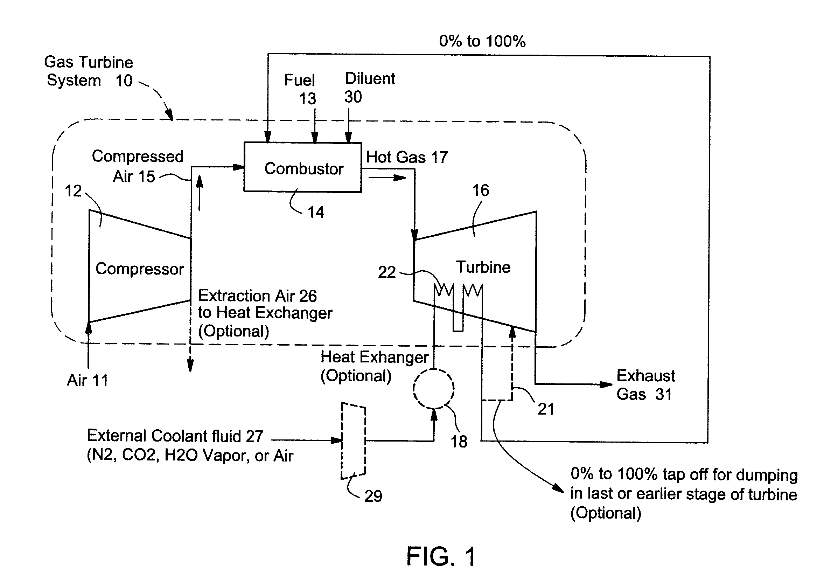

As noted above, FIG. 1 is a simplified schematic diagram depicting the use of a fluid 27 external to a gas turbine system 10 in a closed loop cooling arrangement to provide cooling of the stationary and/or rotating hot gas path components of a gas turbine 16. The gas turbine system 10 includes a compressor 12, which compresses incoming air 11 to a high pressure, a combustor 14, which bums fuel 13 so as to produce a high-pressure, high-velocity hot gas 17, and a turbine 16, which extracts energy from the high-pressure, high-velocity hot gas 17 entering the turbine 16 from the combustor 14, using turbine blades (not shown), which are rotated by the hot gas 17 passing through them. The turbine 16 shown in FIG. 1 can be a multi-stage turbine, in which the hot gas 17 is expanded (and thereby reduced in pressure) as it flows through passages in the several stages of turbine 16, thereby generating work in the several stages of turbine 16 as the hot gas 17 passes through them. Eventually, exhaust gas 31 exits the last stage of turbine 16.

FIG.1 shows a simplified depiction of the external fluid closed loop cooling arrangement used to cool stationary and/or rotating hot gas path components of the gas turbine 16. The closed loop cooling arrangement includes heat exchangers 22, which are connected in series and/or in parallel in turbine 16, and through which the external fluid 27 flows. After the external fluid passes through the heat exchangers 22, anywhere from 0% to 100% of the heated external fluid 27, which cooled the turbine components, is dumped in the discharge casing of the compressor 14 and/or sent to one of the stages of turbine 16, with the stage selected being dependent upon the pressure of the heated external fluid 27.

In the gas turbine system 10 shown in FIG. 1, the external fluid 27 can first be passed through an optional compressor 29 before being introduced into the heat exchangers 22 in turbine 16. The optional compressor 29 can be used to compress the external fluid 27 to compensate for an expected pressure drop in the external fluid's pressure level when it passes into the closed loop cooling arrangement. For example, such a drop in pressure might expected because of a pressure loss in the closed loop resulting from the heat exchangers being connected in series.

The fluid 27 can also be passed through an optional external heat exchanger (HX) 18. In this instance, if the fluid 27 is to be passed through a compressor, like compressor 29, then the fluid 27 will typically first be passed through the compressor before it is passed through the heat exchanger 18, as shown in FIG.1. The heat exchanger 18 can be used to add heat to the external fluid 27 to avoid thermal shock to the turbine components from the external fluid being too cold. Alternatively, heat exchanger 18 can be used to remove heat from the external fluid 27 where the external fluid is too hot so that the external fluid will be able cool the turbine components.

The heat exchangers 22 shown in FIG. 1 can each be a turbine blade with holes or a path drilled or otherwise formed in the blade that allow the external fluid 27 to enter and cool the blade and then exit out of the blade into the path of the hot gas introduced into the turbine 16 from combustor 14. The external cooling fluid 27 flowing through holes or paths in the turbine blades, and then out of the blades, allows the fluid to cool the blades. In cooling the blades, the external fluid absorbs heat from the blades so that a heat exchange occurs within the blades.

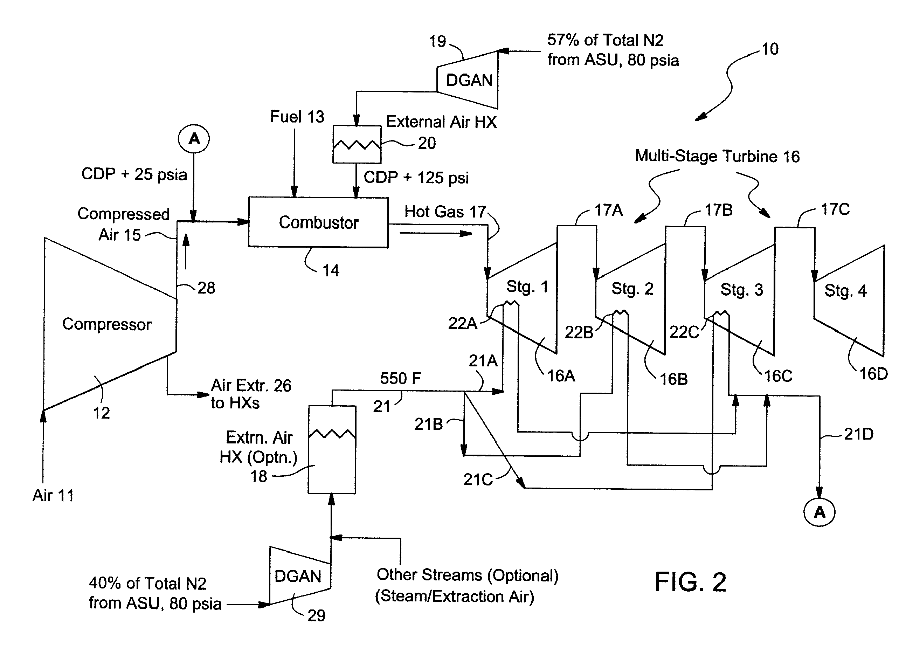

FIGS. 2-4 are each a diagram showing the components of gas turbine system 10, but each using a different embodiment of the external fluid closed loop cooling arrangement to cool the stationary and/or rotating hot gas path components of the gas turbine 16. It should be noted that each of the gas turbine systems 10 shown in FIGS. 2 - 4 is depicted as using nitrogen gas as the external fluid used in the closed loop cooling arrangement, although other fluids could be used.

Like FIG. 1, the gas turbine systems 10 shown in FIGS. 2-4 each include a compressor 12, which compresses incoming air 11 to a high pressure, a combustor 14, which bums fuel 13 so as to produce a high-pressure, high-velocity hot gas 17, and a turbine 16, which extracts energy from the high-pressure, high-velocity hot gas 17 entering the turbine 16 from the combustor 14 using turbine blades that are rotated by the hot gas 17 passing through them. In the embodiments shown in FIG. 2-4, turbine 16 is shown as a multi-stage turbine with four stages 16A, 16B, 166C and 16D. To maximize turbine efficiency, the hot gas 17 is expanded (and thereby reduced in pressure) as it flows through passages 17A, 17B and 17C from the first stage 16A of turbine 16, through the intermediate stages 16B and 16C of turbine 16, to the fourth and last stage 16D of turbine 16, generating work in the several stages of turbine 16 as the hot gas 17 passes through. Here, again, exhaust gas (not shown) exits the last stage 16D of turbine 16.

FIG. 2 shows a gas turbine system embodiment in which turbine cooling is achieved using a parallel cooling arrangement, and in which nitrogen used for the cooling is then dumped in the compressor discharge casing 28 through which compressed air 15 is passed from the compressor 12 to the combustor 14. In the gas turbine system 10 shown in FIG. 1, approximately 57% of the total nitrogen obtained from the ASU at 80 psia (pound-force per square inch absolute) is fed to a DGAN nitrogen compressor 19, after which it is passed to an external air heat exchanger (HX) 20 before being introduced into the combustor 14 at compressor discharge pressure, plus 125 psi.

In the gas turbine system 10 shown in FIG. 2, approximately 40% of the total nitrogen obtained from the ASU at 80 psia is fed to a second DGAN nitrogen compressor 17, after which it is passed to an optional external air heat exchanger (HX) 18 before being introduced at 550° F simultaneously into heat exchangers 22A, 22B and 22C located in the first, second and third stages 16A, 16B and 16C, respectively, of turbine 16 through passages 21A, 21B and 21C, respectively, all of which are connected to a common passage 21 extending from heat exchanger 18. Passages 21, 21A, 21B and 21C are all part of a closed loop through which the nitrogen is passed in cooling the turbine components. It should also be noted that the nitrogen exiting second nitrogen compressor 17 could be optionally mixed with other fluid streams, such as extraction air or steam, so as to be moisturized, before being introduced into optional heat exchanger 18.

As the nitrogen passes through heat exchangers 22A, 22B and 22C, it removes heat from the turbine components located in the first, second and third stages 16A, 16B and 16C, respectively, to thereby cool them. Thereafter, the heated nitrogen passes from the heat exchangers 22A, 22B and 22C to a common passage 21D, after which it is dumped in the compressor discharge casing 28. Passages 21D is also part of the closed loop through which the nitrogen is passed in cooling the turbine components.

The nitrogen obtained from the ASU column is preferably compressed by DGAN compressor 17 to a higher pressure, as necessary, in consideration of an expected closed loop pressure drop of about 20% and the subsequent dumping of the nitrogen in the compressor discharge casing 28, which is at compressor discharge pressure, plus 25 psia. The nitrogen is used in a closed loop, preferably without any moisturizing or added air, to cool the components in the several stages of the gas turbine, and then dumped in the compressor discharge casing 28. The nitrogen closed loop cooling arrangement provides a 5% increased IGCC Net output and a 0.48 absolute pts IGCC net efficiency improvement over the baseline scenario that is practiced in the current state of the art. This is achieved because firing temperature is increased and closed loop heat is integrated in the gas turbine cycle.

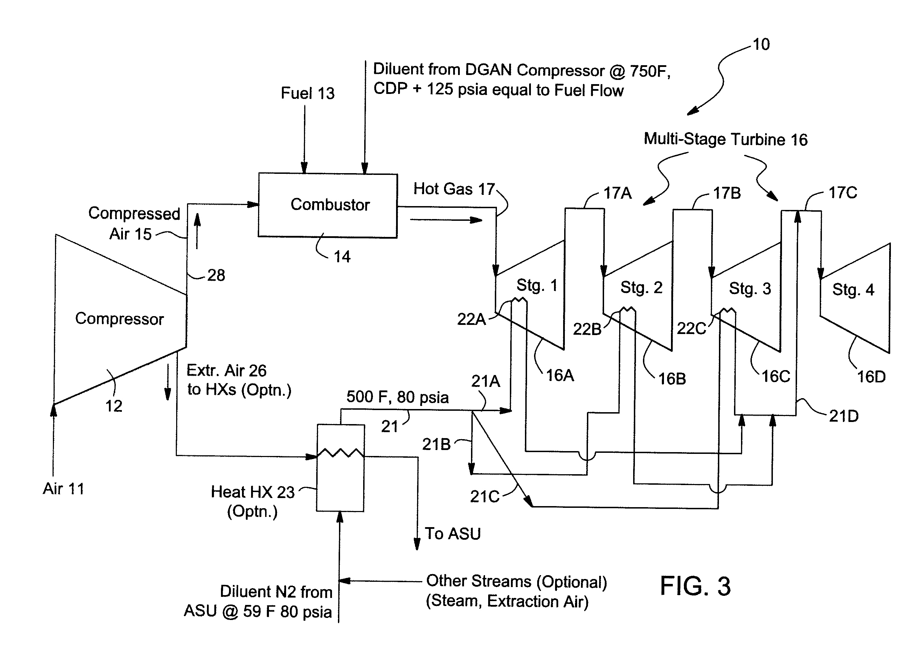

FIG. 3 shows another gas turbine system embodiment in which turbine cooling is again achieved using a parallel cooling arrangement. In this embodiment, low pressure diluent nitrogen from an air separation unit is used in the parallel cooling arrangement for turbine component cooling and then sent to the last stage of the turbine. In this embodiment, there is no need for nitrogen compression. The nitrogen comes out of the ASU typically at 59° F and 80 psia.

In the gas turbine system 10 shown in FIG. 3, diluent nitrogen from a DGAN nitrogen compressor (not shown) is introduced into the combustor 14 at 750° F and compressor discharge pressure, plus 125 psia so that it equals the flow of fuel 13. Thus, one difficulty with the embodiment of FIG. 3 is that the diluent nitrogen DGAN compression system consumes about 30% of the total ASU Power and is a huge auxiliary for an IGCC power plant. The nitrogen needs to compressed by the DGAN compression system to compressor discharge casing pressure plus 125 psia, however, because the nitrogen is added with the fuel 13. Nitrogen, when added with fuel, reduces NOx.

In addition, diluent nitrogen obtained from the ASU at 59° F and 80 psia is passed to an optional external air heat exchanger (HX) 23 before being introduced at 500° F simultaneously into heat exchangers 22A, 22B and 22C located in the first, second and third stages 16A, 16B and 16C, respectively, of turbine 16 through passages 21A, 21B and 21C, respectively, all of which are connected to a common passage 21 extending from heat exchanger 23. It should be noted, however, that the nitrogen obtained from the ASU could be optionally mixed with other fluid streams, such as extraction air or steam, so as to be moisturized, before being introduced into optional heat exchanger 23.

As the nitrogen passes through heat exchangers 22A, 22B and 22C, it removes heat from the turbine components located in the first, second and third stages 16A, 16B and 16C, respectively, to thereby cool them. Thereafter, the heated nitrogen passes from the heat exchangers 22A, 22B and 22C to a common passage 21D, after which it is passed to the last turbine stage 16D.

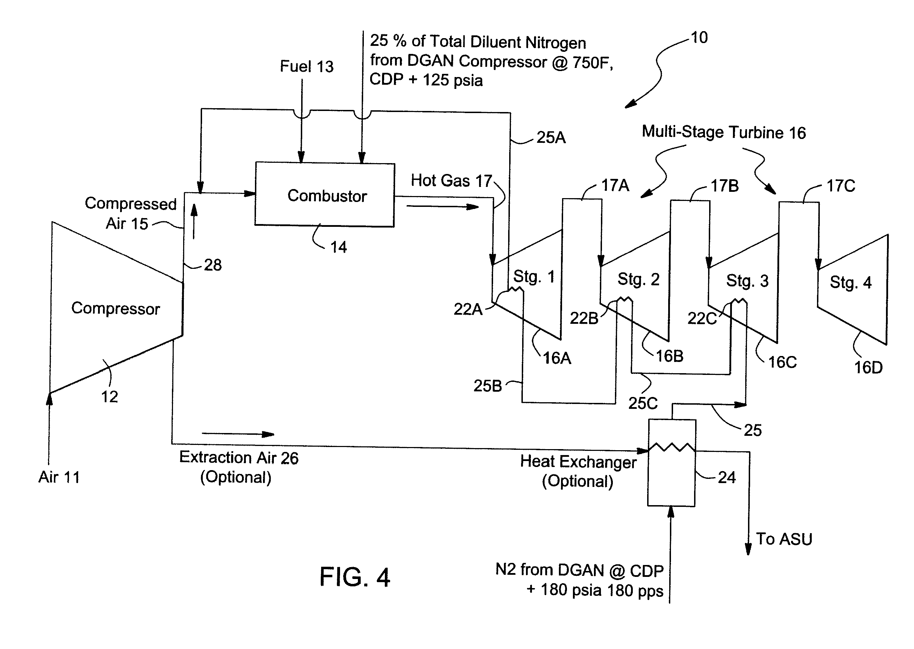

FIG. 4 shows a further gas turbine system embodiment in which turbine cooling is achieved using a series cooling arrangement, rather a parallel cooling arrangement, as shown in FIGS. 2 and 3, and in which the nitrogen used for the cooling is then dumped in the compressor discharge casing 28 through which compressed air 15 is passed from the compressor 12 to the combustor 14. The embodiment shown in FIG. 4 has a disadvantage of a huge pressure loss in the turbine cooling circuit, which requires the nitrogen to be compressed to a higher pressure.

In the gas turbine system 10 shown in FIG. 4, about 25% of the diluent nitrogen from a DGAN nitrogen compressor (not shown) is introduced into the combustor 14 at 750° F and compressor discharge pressure, plus 125 psia, so that it equals the flow of fuel 13. Thus, here again, the difficulty with the embodiment of FIG. 3 is that the diluent nitrogen DGAN compression system again consumes about 30% of the total ASU Power and is a huge auxiliary for an IGCC power plant. But here again, the diluent nitrogen needs to compressed by the DGAN compression system to compressor discharge casing pressure, plus 125 psia, because the nitrogen is added with the fuel 13.

In the gas turbine system 10 shown in FIG. 4, nitrogen obtained from the ASU is fed to a DGAN nitrogen compressor (not shown), after which it is passed to an optional external air heat exchanger (HX) 24 before being introduced in series into heat exchangers 22A, 22B and 22C located in the first, second and third stages 16A, 16B and 16C, respectively. Thus, the nitrogen from optional external air heat exchanger 24 first passes into the heat exchanger 22C located in the third stage 16C of turbine 16 through a passage connected to heat exchanger 24. Thereafter, the nitrogen passes through passage 25C to heat exchanger 22B located in the second stage 16B of turbine 16. Then, the nitrogen passes through passage 25B to heat exchanger 22A located in the first stage 16A of turbine 16. Finally, the nitrogen passes into passage 25A, after which it is dumped in the compressor discharge casing 28. It should be noted, however, that the nitrogen exiting DGAN nitrogen compressor into heat exchanger 24 could be optionally mixed with extraction air, which is then passed onto the ASU.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. An arrangement for cooling components of a gas turbine (16) located in a high temperature path, the turbine being part of a turbine system (10) comprising the turbine (16), a combustor (14) providing hot gas to the turbine (16), and a compressor (12) providing compressed air (15) to the combustor (14) through a compressor discharge casing, the cooling arrangement comprising:
a source of fluid (27) external to the turbine system,
at least one turbine component cooling heat exchanger (22A-C) positioned within the turbine (16),
a closed loop through which the external fluid (27) is transferred from the external source to the turbine component cooling heat exchanger(s) in the turbine (16) and then transferred from the heat exchanger and dumped in the compressor discharge (28) casing or in a stage (16A-D) of the turbine (16),
the external fluid (27) transferred from the heat exchanger removing heat from the turbine components in the high temperature path.

2. The arrangement of claim 1, wherein the external fluid (27) is dumped in the compressor discharge casing (28) when the pressure of the heated fluid (27) is equal to or higher than the compressor discharge pressure so that the fluid to make it to the compressor discharge casing (28).

3. The arrangement of claim 1 or 2, wherein the external fluid (27) is dumped in the stage (16A-C) of the turbine (16) when the pressure of the heated fluid (27) is less than the compressor discharge pressure so that the fluid (27) can not make it to the compressor discharge casing (28).

4. The arrangement of any of claims 1 to 3, wherein all of the external fluid (27) is dumped in either the compressor discharge casing or in the turbine stage (16A-C).

5. The arrangement of any of claims 1 to 3, wherein a first part of the external fluid (27) is dumped in the compressor discharge casing (28) and a second part of the external fluid (27) is dumped in the turbine stage (16A-D).

6. The arrangement of claim 3 or 4, wherein the turbine (16) is a multistage turbine and all of the external fluid (27) is dumped in one of the turbine's stages (16A-C), and wherein the stage in which the external fluid (27) is dumped is determined by the external fluid's pressure level (27).

7. The arrangement of any of claims 1 to 6, wherein the closed loop cooling arrangement is comprised of heat exchangers (22) through which the external fluid (27) flows to cool the components of the gas turbine (16) in the high temperature path.

8. The arrangement of claim 1 to 7, wherein the turbine (16) is a multi-stage turbine (16A-C) with the plurality of turbine component cooling heat exchangers (22A-C) positioned within the stages (16A-C) of the turbine (16).

9. The arrangement of claim 7 or 8, wherein the heat exchangers (22) are connected in series or parallel.

10. The arrangement of claim 7 or 8, wherein a first part of the heat exchangers (220 are connected in series and a second part of the heat exchangers (22) are connected in parallel.

11. The arrangement of any of claims 3 to 10, wherein the external fluid (27) is dumped in the stage (16A-C) of the turbine (16) before nozzles in a path along which the gas from the combustor (14) travels through the turbine stage (16A-C).

12. The arrangement of any preceding claim, wherein the external fluid (27) is nitrogen gas, carbon dioxide, steam or air.

13. The arrangement of any preceding claim further comprising an external compressor (29) in which the external fluid (27) is compressed prior to entry into the closed loop to compensate for an expected pressure drop in the external fluid's pressure level when it enters the closed loop.

14. The arrangement of any preceding claim further comprising a heat exchanger (18) through which is passed air extracted from the compressor (12) providing compressed air (15) to the combustor (14), and over which is passed the external fluid (27), whereby heat is either added to the external fluid (27) to avoid thermal shock to the turbine components to be cooled from the external fluid (27) being too cold, or removed from the external fluid (27) where the external fluid is too hot so that the external fluid (27) will be able cool the turbine components.

15. The arrangement of any of preceding claim, wherein each of the at least one turbine component cooling heat exchangers (22) is a turbine blade with holes in the blade that allow the external fluid (27) to enter and cool the blade and then exit the blade to thereby remove heat from blade.

16. The arrangement of any preceding claim, wherein the external fluid is nitrogen gas, and wherein the source of nitrogen gas is one fan air separation unit, from which about 0% to 40% of the nitrogen gas from the air separation unit is passed to a nitrogen compressor before entering the closed loop, or a diluent nitrogen not compressed before it enters the closed loop, wherein the diluent nitrogen enters the closed loop at about 59° F and at about 80 psia.

17. The arrangement of claim 16, wherein the compressed nitrogen from the nitrogen compressor or the uncompressed diluent nitrogen is optionally mixed with steam or air extracted from the compressor.
